**Europäisches Patentamt**

**European Patent Office**

**Office européen des brevets**

(11) Veröffentlichungsnummer: **0 351 630 B1**

(12) **EUROPÄISCHE PATENTSCHRIFT**

(45) Veröffentlichungstag der Patentschrift:
11.09.91 Patentblatt 91/37

(21) Anmeldenummer: **89112155.0**

(22) Anmeldetag: **04.07.89**

(51) Int. Cl.⁵: **F16H 7/12**

(54) **Spannvorrichtung.**

(30) Priorität: 20.07.88 DE 3824645

(43) Veröffentlichungstag der Anmeldung:
24.01.90 Patentblatt 90/04

(45) Bekanntmachung des Hinweises auf die
Patenterteilung:
11.09.91 Patentblatt 91/37

(84) Benannte Vertragsstaaten:
**DE FR GB IT**

(56) Entgegenhaltungen:
**DE-A- 3 637 103**
**FR-A- 2 609 139**
**US-A- 4 557 707**
**US-A- 4 725 260**

(73) Patentinhaber: **INA Wälzlager Schaeffler KG**
**Industriestrasse 1-3 Postfach 1220**
**W-8522 Herzogenaurach (DE)**

(72) Erfinder: **Koschmieder, Hartmut, Ing.-grad.**
**Reinschartenweg 6**
**W-8520 Erlangen (DE)**
Erfinder: **Petri, Werner, Ing.-grad.**
**Bahnstrasse 17**
**W-8520 Erlangen (DE)**

## Beschreibung

Die Erfindung betrifft eine Spannvorrichtung, insbesondere Riemenspannvorrichtung für den Antrieb von Hilfsaggregaten einer Brennkraftmaschine, mit einem Schwenkarm, an dessen einem Ende eine Spannrolle für den Riemen drehbar gelagert ist, und dessen anderes Ende mit einer Nabe auf einen zur Drehachse der Spannrolle parallelen, in einem festen topfförmigen Gehäuse angeordneten Lagerzapfen aufgesteckt ist, mit einer Feder, deren eines Ende an dem Schwenkarm und deren anderes Ende an dem Gehäuse befestigt ist, und mit einer in dem Gehäuse angeordneten Reibungsdämpfungseinrichtung, die für den Schwenkarm in den beiden Bewegungsrichtungen unterschiedlich große Dämpfungskräfte erzeugt und einen an der Gehäusewand anliegenden und von dem Schwenkarm beaufschlagten Reibbelag aufweist.

Eine solche Spannvorrichtung ist aus der DE-A-3637103 bekannt. Die Reibungsdämpfungseinrichtung enthält dort einen Reibring, der zwischen einer Ringfläche des Gehäuses und der Nabe des Schwenkhebels angeordnet ist und mit einer Umfangsfläche an dem benachbarten Bauteil anliegt. Dieser Reibring ist an einem Ende an dem anderen benachbarten Bauteil befestigt. Die Reibung entsteht an dem Bauteil, an dem der Reibring anliegt. Wird der Schwenkhebel in der einen Richtung gedreht, dann wird der Reibring fester an die ringförmige Anlagefläche gedrückt, als bei einer Drehung in der anderen Richtung. Dadurch ergeben sich die unterschiedlich großen Dämpfungskräfte dieser Einrichtung.

Die bekannte Ausführung hat den Nachteil, daß der Reibring sehr toleranzempfindlich ist. Sein Durchmesser muß sehr genau eingehalten werden, um eine gleichmäßige Anlage an der Reibfläche zu erhalten. Da eine solche als Reibring ausgebildete Feder ein Träger gleicher Festigkeit sein soll, muß sich die Dicke des Reibringes längs seines Umfanges geringfügig ändern. Ein solcher Reibring ist daher nur mit großem technischen Aufwand und daher nicht wirtschaftlich herstellbar. Diese Nachteile, sowie auch Verschleißerscheinungen an dem Reibring, wirken sich besonders dann ungünstig auf die Einhaltung vorgegebener Reibungsverhältnisse aus, wenn der Reibring nur eine einzige Federwindung hat.

Der Erfindung liegt die Aufgabe zugrunde, eine Spannvorrichtung zu schaffen, die aus einfach herstellbaren Bauteilen zusammengesetzt ist und über lange Betriebszeiten eine gleichmäßige Arbeitsweise ermöglicht.

Diese Aufgabe wird erfindungsgemäß dadurch gelöst, daß die Reibungsdämpfungseinrichtung einen an dem Schwenkarm befestigten Innenring, einen an dem Reibbelag anliegenden Außenring und mehrere zwischen diesen Ringen angeordnete Wälzkörper enthält, welche in Mulden der Ringe längs Rampen abrollbar angeordnet sind. Bei einer Verschwenkung des Schwenkhebels in einer Richtung erfolgt durch Abrollen der Wälzkörper an den Rampen ein Auseinanderdrücken des Innenringes und des Außenringes, so daß die Reibungskraft zwischen dem Reibbelag und dem Außenring vergrößert wird. Bei der Verschwenkung in der anderen Richtung können die Wälzkörper an den Rampen entlang in die Mulde zurückrollen, so daß ein Auseinanderdrücken von Innenring und Außenring nicht erfolgt. Bei dieser Kupplung des Schwenkarms mit dem reibenden Außenring über die Wälzkörper lassen sich also in den beiden Schwenkrichtungen unterschiedliche Reibungskräfte erzeugen.

Die Reibungsdämpfungseinrichtung enthält eine dem Innenring gegenüber dem Außenring ein Drehmoment aufzwingende zusätzliche Feder. Diese sorgt dafür, daß zwischen dem Außenring und dem Reibbelag immer ein konstanter Reibkraftanteil vorhanden ist. Erst bei Bewegung des Schwenkarmes entgegen der Riemenspannrichtung wird die auf den Reibbelag wirkende Normalkraft infolge des Abrollens der Wälzkörper an den Rampen und des dadurch hervorgerufenen Auseinanderdrückens von Außenring und Innenring verstärkt und so die Reibungsdämpfung vergrößert. Diese Reibungsdämpfungseinrichtung ermöglicht also eine richtungsabhängige Verstärkung der Reibungskraft.

Der Innenring, der Außenring und der Reibbelag können als den Lagerzapfen umgebende und in dessen axialer Richtung hintereinander angeordnete Kreisscheiben ausgebildet sein, wobei der Reibbelag am Boden des topfförmigen Gehäuses anliegt. Auf diese Weise ergibt sich eine axial wirkende Reibungsdämpfungseinrichtung. Dabei kann die mit einem Ende an dem Innenring und mit dem anderen Ende an dem Außenring befestigte zusätzliche Feder als den Lagerzapfen umgebende Schraubenfeder ausgebildet sein.

Es ist auch möglich, daß der Innenring, der Außenring und der Reibbelag als den Lagerzapfen umgebende konzentrische Kreisringe ausgebildet sind, wobei der Reibbelag am Mantel des Gehäuses anliegt. In diesem Fall ergibt sich eine radial wirkende Reibungsdämpfungseinrichtung. Die Mulden können hier mit den Rampen für die Wälzkörper in dem durch einen Schlitz geöffneten und mit radialer Vorspannung eingebauten Außenring angeordnet sein. Dieser mit dem Reibbelag in Kontakt stehende Ring ist dann radial elastisch und wirkt auf diese Weise gleichzeitig als Feder.

Als Wälzkörper können sowohl für die axiale Ausführung, als auch für die radiale Ausführung Kugeln oder Rollen verwendet werden.

Ausführungsformen der Erfindung sind in den Schutzansprüchen enthalten.

Ausführungsbeispiele der Erfindung sind in der Zeichnung dargestellt und werden im folgenden näher beschrieben. Es zeigen

Figur 1     eine Spannvorrichtung mit einer axial wirkenden Reibungsdämpfungseinrichtung, teilweise in einem Axialschnitt ;

Figur 2     einen vergrößerten Ausschnitt gemäß Linie II-II der Figur 1 ;

Figur 3     eine Spannvorrichtung mit einer radial wirkenden Reibungsdämpfungsvorrichtung, teilweise in einem Axialschnitt ;

Figur 4     die Spannvorrichtung mit radial wirkender Reibungsdämpfungsvorrichtung gemäß Linie IV-IV der Figur 3.

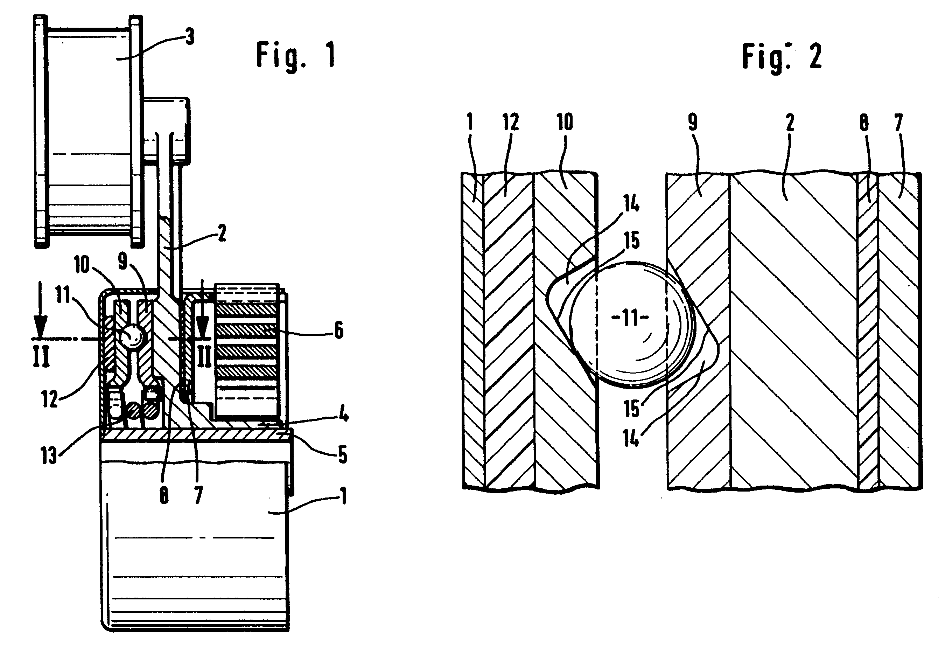

Eine erfindungsgemäße Spannvorrichtung gemäß Figur 1 und 2 besteht aus einem festen topfförmigen Gehäuse 1, in welchem ein Schwenkarm 2 mit einem Ende innerhalb des Bereichs zweier Endanschläge verschwenkbar gelagert ist. An dem außerhalb des Gehäuses 1 befindlichen Ende des Schwenkarmes 2 ist eine Spannrolle 3 für einen nicht dargestellten Riemen um eine zur Schwenkachse des Schwenkarms parallele Achse drehbar gelagert. Die Lagerung innerhalb des Gehäuses 1 ist mit Hilfe einer Nabe 4 des Schwenkarms durchgeführt, die auf einen festen Lagerzapfen 5 des Gehäuses gesteckt ist.

Innerhalb des Gehäuses 1 befindet sich eine Feder 6, die hier als Spiralfeder ausgeführt ist, jedoch auch eine andere Feder sein kann. Die Feder 6 ist mit einem Ende an der Nabe 4 des Schwenkarms und mit dem anderen Ende an dem Gehäuse 1 befestigt. Sie bewirkt die Rückstellung der von dem Riemen ausgelenkten Spannrolle 3. Der Raum der Feder 6 ist in dem Gehäuse 1 durch einen Zwischenboden 7 begrenzt, an dessen von der Feder 6 abgewandter Seite sich der Schwenkhebel über einen Reibbelag 8 abstützt.

Die Reibungsdämpfungseinrichtung der Spannvorrichtung besteht aus einem Innenring 9, einem Außenring 10, dazwischen angeordneten Wälzkörpern 11, einem Reibbelag 12 und einer zusätzlichen Feder 13. Der Innenring 9, der Außenring 10 und der Reibbelag 12 sind kreisscheibenförmig ausgeführt. Der Innenring 9 ist an der von dem Reibbelag 8 abgewandten Seite des Schwenkarms 2 innerhalb des Gehäuses 1 befestigt. Der Reibbelag 12 liegt mit einer Seite an dem Boden des Gehäuses 1 an, während an seiner anderen Seite der Außenring 10 anliegt. Die zusätzliche Feder 13 ist als Schraubenfeder ausgebildet und umgibt den Lagerzapfen 5. Sie ist mit einem Ende an dem Außenring 10 und mit dem anderen Ende an dem Innenring 9 befestigt.

Sowohl in dem Innenring 9, als auch in dem Außenring 10 sind für jeden Wälzkörper 11, der in diesem Fall eine Kugel ist, Mulden 14 angeordnet, die teilweise von Rampen 15 begrenzt werden. Jede Rampe 15 ist gegenüber der Stirnfläche des Innenringes 9 bzw. des Außenringes 10 geneigt angeordnet. Die Rampen 15 zweier Mulden 14 für einen Wälzkörper 11 sind gegenüberliegend angeordnet, so daß der Wälzkörper 11 bei einer relativen Verdrehung der Ringe 9 und 10 zueinander gleichzeitig auf den beiden Rampen 15 abrollen kann, wobei sich der Abstand der Ringe 9 und 10 ändert.

Bei einer Verschwenkung des Schwenkarms 2 wird die Bewegung des Innenringes 9 über die Wälzkörper 11 und die zusätzliche Feder 13 auf den Außenring 10 übertragen. Dieser gleitet an dem Reibbelag 12 entlang, wo die Reibungsdämpfung verursacht wird. Bei der Bewegung des Schwenkarms entgegen der Riemenspannrichtung rollen die Wälzkörper 11 zu den äußeren Enden der Rampen 15, wodurch die Ringe 9 und 10 axial auseinandergedrückt werden. Dadurch wird die auf den Reibbelag 12 einwirkende Normalkraft und damit die Reibungsdämpfung vergrößert. Bei der Bewegung des Schwenkarms in der entgegengesetzten Richtung können die Wälzkörper 11 an den Rampen 15 in die Mulden 14 zurückrollen. In diesem Fall ist die auf den Reibbelag 12 einwirkende Normalkraft und damit die Reibungsdämpfung geringer.

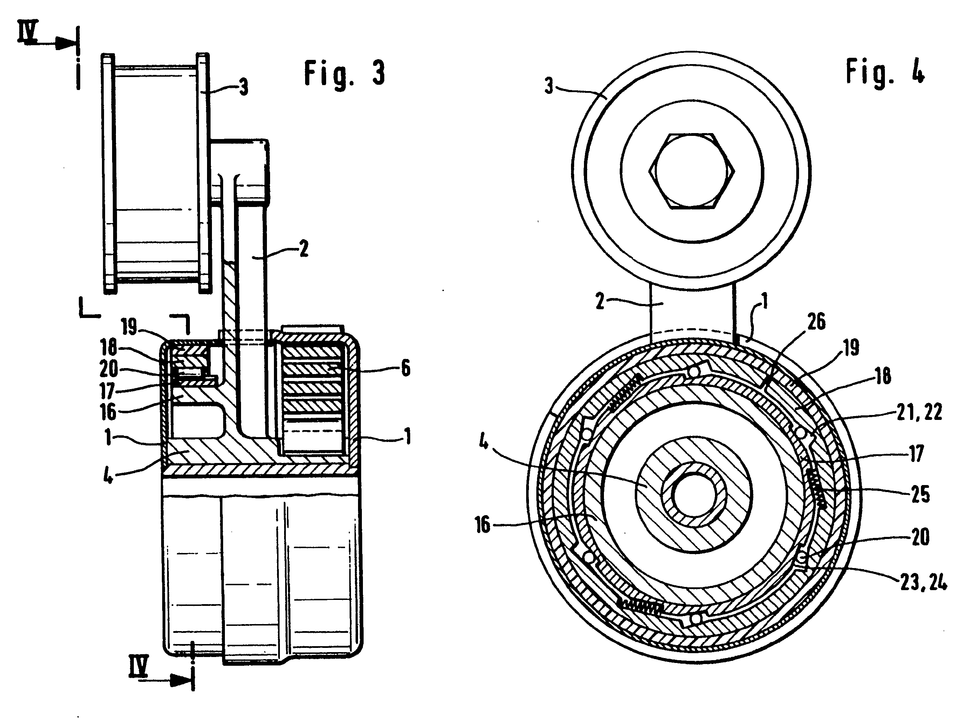

Die Spannvorrichtung gemäß Figur 3 und 4 der Zeichnung ist ähnlich aufgebaut, so daß für gleiche Teile dieselben Bezugszahlen wie in Figur 1 und 2 verwendet sind. Sie unterscheidet sich jedoch durch ihre radial wirkende Reibungsdämpfungseinrichtung. Diese besteht aus mehreren die Nabe 4 konzentrisch umgebenden Ringen, nämlich einem an dem Schwenkarm 2 ausgebildeten Stützring 16, an dem ein Innenring 17 befestigt ist, einem Außenring 18 und einem Reibbelag 19, der am Mantel des Gehäuses 1 an der Innenseite anliegt. Zwischen dem Innenring 17 und dem Außenring 18 befinden sich als Rollen ausgebildete Wälzkörper 20, die jeweils in Mulden 21 des Außenringes 18 mit Rampen 22 und in Mulden 23 des Innenringes 17 mit Rampen 24 angeordnet sind. Der Außenring 18, der mit seiner äußeren Oberfläche an dem Reibbelag 19 anliegt, ist an einer Stelle seines Umfangs durch einen Schlitz 26 geöffnet, so daß er radial elastisch ist. Er kann daher mit Vorspannung eingebaut sein und wirkt wie eine Feder.

Der Innenring 17 und der Außenring 18 weisen außerdem zugeordnete Ausnehmungen auf, in denen Federn 25 angeordnet sind, wobei sich jede Feder mit einem Ende an dem Innenring 17 und mit dem anderen Ende an dem Außenring 18 abstützt. Dadurch wird eine relative Verdrehung zwischen dem Innenring 17 und dem Außenring 18 ermöglicht, wobei über die auf den Rampen 22 und 24 entlangrollenden Wälzkörper 20 je nach Drehrichtung der radiale Abstand und damit die entstehende Reibungskraft vergrößert oder verkleinert wird.

Die Bewegung des Schwenkarms 2 wird von dem Innenring 17 über die Wälzkörper 20 auf den Außenring 18 übertragen, der an dem Reibbelag 19 in Umfangsrichtung entlanggleitet und so die Reibungsdämpfung erzeugt. Bei einer Bewegung des Schwenkarmes 2 entgegen der Riemenspannrichtung rollen die Wälzkörper 20 in den Mulden 21 und 23 zu den äußeren Enden der Rampen 22 und 24 und bewirken dadurch ein radiales Aufweiten des Außenringes 18. Die Kraft, mit der der Außenring 18 an den Reibbelag 19 angedrückt wird, wird dadurch größer, so daß auch die Reibungsdämpfung vergrößert wird. Eine solche Aufweitung tritt nicht auf, wenn der Schwenkarm 2 in der anderen Richtung verschwenkt wird, weil die Wälzkörper 20 dann in den Mulden 21 und 23 zurückrollen.

## Patentansprüche

1. Spannvorrichtung, insbesondere Riemenspannvorrichtung für einen RIEMEN-Antrieb von Hilfsaggregaten einer Brennkraftmaschine, mit einem Schwenkarm, (2) an dessen einem Ende eine Spannrolle (3) für einen Riemen drehbar gelagert ist, und dessen anderes Ende mit einer Nabe (4) auf einen zur Drehachse der Spannrolle parallelen, in einem festen topfförmigen Gehäuse (1) angeordneten Lagerzapfen (5) aufgesteckt ist, mit einer Feder (6) deren eines Ende an dem Schwenkarm (2) und deren anderes Ende an dem Gehäuse (1) befestigt ist, und mit einer in dem Gehäuse (1) angeordneten Reibungsdämpfungseinrichtung, die für den Schwenkarm (2) in den beiden Bewegungsrichtungen unterschiedlich große Dämpfungskräfte erzeugt und einen an der Gehäusewand anliegenden und von dem Schwenkarm (2) beaufschlagten Reibbelag (12 ; 19) aufweist, **dadurch gekenzeichnet**, daß die Reibungsdämpfungseinrichtung einen an dem Schwenkarm (2) befestigten Innenring (9, 17), einen an dem Reibbelag (12 ; 19) anliegenden Außenring (10 ; 18) und mehrere zwischen diesen Ringen angeordnete Wälzkörper (11 ; 20) enthält, welche in Mulden (14 ; 21 ; 23) der Ringe längs Rampen (15 ; 22 ; 24) abrollbar angeordnet sind.

2. Spannvorrichtung nach Anspruch 1, **dadurch gekennzeichnet**, daß die Reibungsdämpfungseinrichtung eine dem Innenring (9 ; 17) gegenüber dem Außenring (10, 18) ein Drehmoment aufzwingende zusätzliche Feder (13) enthält.

3. Spannvorrichtung nach Anspruch 1 oder 2, **dadurch gekennzeichnet**, daß der Innenring (9), der Außenring (10) und der Reibbelag (12) als den Lagerzapfen (5) umgebende und in dessen axialer Richtung hintereinander angeordnete Kreisscheiben ausgebildet sind, wobei der Reibbelag (12) am Boden des Gehäuses (1) anliegt.

4. Spannvorrichtung nach Anspruch 3, **dadurch gekennzeichnet**, daß die mit einem Ende an dem Innenring (9) und mit dem anderen Ende an dem Außenring (10) befestigte zusätzliche Feder (13) als den Lagerzapfen (5) umgebende Schraubenfeder ausgebildet ist.

5. Spannvorrichtung nach Anspruch 1, **dadurch gekennzeichnet**, daß der Innenring (17), der Außenring (18) und der Reibbelag (19) als den Lagerzapfen (5) umgebende konzentrische Kreisringe ausgebildet sind, wobei der Reibbelag (19) am Mantel des Gehäuses (1) anliegt.

6. Spannvorrichtung nach Anspruch 5, **dadurch gekennzeichnet**, daß der Innenring (17) an einem die Nabe (4) konzentrisch umgebenden Stützring (16) des Schwenkarms (2) befestigt ist.

7. Spannvorrichtung nach Anspruch 5 oder 6, **dadurch gekennzeichnet**, daß für die Wälzkörper (20) die einen Mulden (21) mit den Rampen (22) in dem durch einen Schlitz (26) geöffneten und mit radialer Vorspannung eingebauten Außenring (18) und die anderen Mulden (23) mit den Rampen (24) in dem Innenring (17) angeordnet sind.

8. Spannvorrichtung nach einem der vorhergehenden Ansprüche, **dadurch gekennzeichnet**, daß jeweils in dem Innenring (17) und in dem Außenring (18) einander zugeordnete Ausnehmungen vorgesehen sind, wobei jeweils in einer Ausnehmung des Innenringes (17) und der zugehörigen Ausnehmung des Außenringes (18) eine auf die Ringe (17, 18) einwirkende Feder (25) angeordnet ist.

9. Spannvorrichtung nach einem der vorhergehenden Ansprüche, **dadurch gekennzeichnet**, daß die Wälzkörper (20) Rollen sind.

10. Spannvorrichtung nach einem der vohergehenden Ansprüche, **dadurch gekennzeichnet**, daß die Wälzkörper (11) Kugeln sind.

## Claims

1. Tensioning device, in particular a belt tensioning device for a belt drive of auxiliary units of an internal combustion engine, comprising a pivoted arm (2), at one end of which a tension roller (3) for a belt is rotatably mounted and whose other end is mounted with a hub (4) on a bearing journal (5) which is parallel to the rotation axis of the tension roller and arranged in a rigid pot-shaped housing (1), also comprising a spring (6), one end of which is fixed to the pivoted arm (2) and the other end of which is fixed to the housing (1), further comprising a friction damping device which is arranged in the housing (1) and produces damping forces of different magnitude for the pivoted arm (2) in the two directions of motion and has a friction lining (12 ; 19) which bears against the wall of the housing (1) and is acted upon by the pivoted arm (2), characterized in that the friction damping device comprises an inner ring (9 ; 17) fixed to the pivoted arm (2), an outer ring (10 ; 18) bearing against the friction lining (12 ; 19) and several rolling elements (11 ; 20) arranged between these rings to be able to roll along ramps (15 ; 22 ; 24) in troughs (14 ; 21 ; 23) of the rings.

2. Tensioning device according to claim 1, characterized in that the friction damping device comprises an additional spring (13) which imposes a torque on the inner ring (9 ; 17) with respect to the outer ring (10 ; 18).

3. Tensioning device according to claim 1 or 2, characterized in that the inner ring (9), the outer ring (10) and the friction lining (12) are designed as circular disks surrounding the bearing journal (5) and arranged behind one another in the axial direction thereof, with the friction lining (12) bearing against the bottom of the housing (1).

4. Tensioning device according to claim 3, characterized in that the additional spring (13) fixed at one end to the inner ring (9) and at the other end to the outer ring (10) is designed as a coil spring surrounding the bearing journal (5).

5. Tensioning device according to claim 1, characterized in that the inner ring (17), the outer ring (18) and the friction lining (19) are designed as concentric circular rings surrounding the bearing journal (5), with the friction lining (19) bearing against the peripheral surface of the housing (1).

6. Tensioning device according to claim 5, characterized in that the inner ring (17) is fixed to a support ring (16) of the pivoted arm (2), which support ring (16) surrounds the hub (4) concentrically.

7. Tensioning device according to claim 5 or 6, characterized in that the one throughs (21) with the ramps (22) for the rolling elements (20) are arranged in the outer ring (18) which is open through a slit (26) and installed with radial pre-tension and the other troughs(23) with the ramps (24) for the rolling elements (20) are arranged in the inner ring (17).

8. Tensioning device according to one of the preceding claims, characterized in that recesses associated with each other are provided in the inner ring (17) and in the outer ring (18) respectively, a spring (25) acting on the rings (17, 18) being arranged in each recess of the inner ring (17) and the associated recess of the outer ring (18).

9. Tensioning device according to one of the preceding claims, characterized in that the rolling elements (20) are rollers.

10. Tensioning device according to one of the preceding claims, characterized in that the rolling elements (11) are balls.

## Revendications

1. Tendeur, en particulier pour une courroie d'entraînement d'appareils auxiliaires d'un moteur à combustion interne, comprenant un bras pivotant (2) à une extrémité duquel un galet-tendeur (3) pour une courroie est monté rotatif et dont l'autre extrémité est montée par un moyeu (4) sur un tourillon (5) parallèle à l'axe de pivotement du galet-tendeur et qui est disposé dans un boîtier rigide (1) en forme de pot, un ressort (6) dont une extrémité est fixée au bras pivotant (2) et dont l'autre extrémité est fixée au boîtier (1), et un dispositif d'amortissement à friction qui est agencé dans le boîtier (1) et produit des forces d'amortissement de grandeurs différentes pour le bras pivotant (2) dans les deux sens de mouvement de celui-ci et qui est pourvu d'une garniture de friction (12, 19) qui s'appuie contre la paroi du boîtier (1) et est sollicitée par le bras pivotant (2), caractérisé en ce que le dispositif d'amortissement à friction comprend une bague interne (9, 17) fixée au bras pivotant (2), une bague externe (10, 18) qui s'appuie contre la garniture de friction (12, 19) et une pluralité de corps roulants (11, 20) disposés entre ces bagues et pouvant rouler dans des cavités (14, 21, 23) des bagues le long de rampes (15, 22, 24).

2. Tendeur selon la revendication 1, caractérisé en ce que le dispositif d'amortissement à friction contient un ressort supplémentaire (13) qui impose un moment de rotation à la bague interne (9, 17) par rapport à la bague externe (10, 18).

3. Tendeur selon la revendication 1 ou 2, caractérisé en ce que la bague interne (9), la bague externe (10) et la garniture de friction (12) sont configurées en forme de disques circulaires qui entourent le tourillon (5) et qui sont disposés l'un derrière l'autre dans la direction axiale de celui-ci, avec la garniture de friction (12) s'appuyant contre le fond du boîtier (1).

4. Tendeur selon la revendication 3, caractérisé en ce que le ressort supplémentaire (13) qui est fixé par une extrémité à la bague interne (9) et par l'autre extrémité à la bague externe (10), est un ressort à boudin entourant le tourillon (5).

5. Tendeur selon la revendication 1, caractérisé en ce que la bague interne (17), la bague externe (18) et la garniture de friction (19) sont configurées en forme de bagues circulaires concentriques qui entourent le tourillon (5), avec la garniture de friction (19) s'appuyant contre la surface périphérique du boîtier (1).

6. Tendeur selon la revendication 5, caractérisé en ce que la bague interne (17) est fixée à une bague de support (16) du bras pivotant (2), laquelle bague de support entoure le moyeu (4) concentriquement.

7. Tendeur selon la revendication 5 ou 6, caractérisé en ce que les cavités (21) pour les corps roulants (20), pourvues de rampes (22), sont disposées dans la bague externe (18) qui est ouverte par une fente (26) et montée en précontrainte, et les autres cavités (23) pour les corps roulants (20), pourvues des rampes (24), sont disposées dans la bague interne (17).

8. Tendeur selon une des revendications précédentes, caractérisé en ce que des évidements associés les uns aux autres sont prévus dans la bague interne (17) et dans la bague externe (18) respectivement, un ressort (25) agissant sur les bagues (17, 18) étant agencé dans chaque évidement de la bague interne (17) et dans l'évidement associé de la bague externe (18).

9. Tendeur selon une des revendications précédentes, caractérisé en ce que les corps roulants (20) sont des rouleaux.

10. Tendeur selon une des revendications précédentes, caractérisé en ce que les corps roulants (11) sont des billes.

Fig. 1

Fig. 2

EP 0 351 630 B1

Fig. 3

Fig. 4

3

19
18
20
17
16
1
4

2

6

1

3

2

1

26

19

18

21, 22

17

25

20

23, 24

4

16

EP 0 351 630 B1